(19) Europäisches Patentamt
European Patent Office
Office européen des brevets

(11) EP 4 137 331 A1

(12) EUROPEAN PATENT APPLICATION
published in accordance with Art. 153(4) EPC

(43) Date of publication:
**22.02.2023 Bulletin 2023/08**

(21) Application number: **21793138.5**

(22) Date of filing: **09.04.2021**

(51) International Patent Classification (IPC):
***B60C 1/00*** *(2006.01)* ***C08L 7/00*** *(2006.01)*
***C08K 3/013*** *(2018.01)* ***B60C 11/00*** *(2006.01)*

(52) Cooperative Patent Classification (CPC):
**B60C 1/00; B60C 11/00; C08K 3/013; C08L 7/00; C08L 9/00**

(86) International application number:
**PCT/JP2021/015077**

(87) International publication number:
**WO 2021/215278 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020 JP 2020077215**

(71) Applicant: **Sumitomo Rubber Industries, Ltd.**
**Kobe-shi, Hyogo 651-0072 (JP)**

(72) Inventor: **HAMAMURA, Kenji**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) Provided is a tire comprising a tread, wherein a ratio of a tire weight G (kg) to a maximum load capacity $W_L$ (kg) of the tire ($G/W_L$) is 0.0150 or less, wherein the tread has at least one rubber layer formed of a rubber composition comprising a rubber component and a reinforcing filler, and **wherein a tan δ at 30°C of the rubber** composition is 0.15 or less, and a complex elastic modulus at 30°C ($E^*_{30}$) of the rubber composition is 8.0 MPa or less.



Processed by Luminess, 75001 PARIS (FR)

## Description

TECHNICAL FIELD

The present invention relates to a tire having improved durability and ride comfort with a good balance.

BACKGROUND ART

Patent Document 1 discloses a heavy duty tire having a maximum load capacity of 2500 kg or more, which can be reduced in weight without impairing the tire strength.

PRIOR ART DOCUMENT

Patent Document

Patent Document 1: JP 2005-212742 A

SUMMARY OF THE INVENTION

PROBLEM TO BE SOLVED BY THE INVENTION

Conventionally, in a tire having a large maximum load capacity, it has been necessary to suppress deformation of the tire and secure durability allowing for running without damage. On the other hand, in such a tire, a spring value of the tire becomes high and an input from a road surface becomes easily transmitted to a vehicle body, and therefore, there has been tendency that ride comfort deteriorates.

An object of the present invention is to provide a tire having improved durability and ride comfort with a good balance.

MEANS TO SOLVE THE PROBLEM

As a result of intensive studies, the present inventor has found that a tire having improved durability and ride comfort with a good balance can be obtained by setting a tire weight with respect to a maximum load capacity of **the tire, a tan δ and a complex elastic modulus of a rubber composition of a** tread within predetermined ranges, and completed the present invention.

That is, the present invention relates to:

[1] A tire comprising a tread, wherein a ratio of a tire weight G (kg) to a maximum load capacity $W_L$ (kg) of the tire ($G/W_L$) is 0.0150 or less, wherein the tread has at least one rubber layer formed of a rubber composition comprising a rubber component and a reinforcing filler, and **wherein a tan δ at** 30°C of the rubber composition is 0.15 or less, and a complex elastic modulus at 30°C ($E^*_{30}$) of the rubber composition is 8.0 MPa or less,
**[2] The tire of [1] above, wherein a tan δ at 0°C of the rubber** composition is 0.35 or more,
**[3] The tire of [1] or [2] above, wherein a ratio of the tan δ at 0°C of** the rubber composition to the tire weight **G (kg) (0°C tan δ/G) is more than** 0.050,
[4] The tire of any one of [1] to [3] above, wherein the rubber composition has a specific gravity of 1.200 or less,
[5] The tire of any one of [1] to [4] above, wherein a content of the reinforcing filler based on 100 parts by mass of the rubber component is 80 parts by mass or less,
[6] The tire of any one of [1] to [5] above, wherein the rubber component comprises 30% by mass or more of an isoprene-based rubber and 20% by mass or more of a styrene-butadiene rubber,
[7] The tire of any one of [1] to [6] above, wherein a value obtained by multiplying $G/W_L$ by $E^*_{30}$ is less than 0.1000,
[8] The tire of any one of [1] to [7] above, wherein a content of silica based on 100 parts by mass of the rubber component is 20 to 80 parts by mass, and a content of silica in 100% by mass of silica and carbon black in total is 50 to 90% by mass,
[9] The tire of any one of [1] to [8] above, wherein the rubber component comprises 30 to 80% by mass of an isoprene-based rubber and 20 to 70% by mass of a styrene-butadiene rubber,
[10] The tire of any one of [1] to [9] above, wherein the rubber component further comprises a butadiene rubber,
**[11] The tire of any one of [1] to [10] above, wherein the tan δ at** 0°C of the rubber composition is 0.35 to 0.80, and 0°C tan **δ/G** is more than 0.055,
[12] The tire of any one of [1] to [11] above, wherein the tread has a land part partitioned by a plurality of circumferential

grooves, and wherein, when a distance between an extension line of the land part and an extension line of a deepest part of a groove bottom of the circumferential groove is defined as H, a rubber layer formed of the rubber composition is arranged on at least a part of a region of the distance H from the outermost surface of the land part toward inside in a radial direction,

[13] The tire of [12] above, wherein two or more rubber layers are present in the region of the distance H from the outermost surface of the land part toward inside in the radial direction, at least one of the two or more rubber layers being formed of the rubber composition.

## EFFECTS OF THE INVENTION

The tire of the present invention, obtained by setting the tire weight **with respect to the maximum load capacity of the tire, the tan** $\delta$ **and the** complex elastic modulus of the rubber composition of the tread within the predetermined ranges, has improved durability and ride comfort with a good balance.

## BRIEF DESCRIPTION OF THE DRAWINGS

FIG. 1 is an enlarged cross-sectional view schematically showing a part of a tread of a tire.

FIG. 2 is a diagram showing a tire cross-sectional width Wt, a tire cross-sectional height Ht, and a tire outer diameter Dt in a cross-section of the tire.

## EMBODIMENT FOR CARRYING OUT THE INVENTION

The tire which is one embodiment of the present disclosure is a tire comprising a tread, wherein a ratio of a tire weight G (kg) to a maximum load capacity $W_L$ (kg) of the tire ($G/W_L$) is 0.0150 or less, wherein the tread has at least one rubber layer formed of a rubber composition comprising a rubber **component and a reinforcing filler, wherein a tan** $\delta$ **at 30°C of the rubber** composition is 0.15 or less, and wherein a complex elastic modulus at 30°C ($E^*_{30}$) of the rubber composition is 8.0 MPa or less.

When the ratio of the tire weight G (kg) to the maximum load capacity $W_L$ (kg) of the tire ($G/W_L$) is set to 0.0150 or less, transmission of vibration of the entire tire can be suppressed. Moreover, when a rubber composition having a complex elastic modulus at 30°C ($E^*_{30}$) of 8.0 MPa or less is used for a tread, an input from a road surface during running can be reduced. In addition, it is considered that the cooperation of these can suppress the vibration of the entire tire and improve ride comfort. **Furthermore, it is considered that, by setting the tan** $\delta$ **at 30°C of the rubber** composition to 0.15 or less, heat generation at a tread part during running can be suppressed, and by satisfying the above-described configuration to also reduce the vibration of the tire, durability of the tire can be improved.

In the present disclosure, the tire weight G (kg) is a weight of a single tire not including a weight of a rim.

The tire of the present disclosure may comprise a sealant for preventing a flat tire, an electronic component for monitoring, a noise suppressing body (sponge) for improving silence property, etc. When the tire comprises these components, the tire weight G (kg) shall be a weight including them.

In the present disclosure, the maximum load capacity $W_L$ (kg) is a value calculated by the following equation (1) and (2) where the tire cross-sectional width is defined as Wt (mm), the tire cross-sectional height is defined as Ht (mm), and the tire outer diameter is defined as Dt (mm) when the tire is filled with 250 kPa of air, the value being smaller than the maximum load capacity based on the load index (LI) defined by the JATTA standard by about 50 to 100 kg:

$$V = \{(Dt/2)^2 - (Dt/2-Ht)^2\} \times \pi \times Wt \quad (1)$$

$$W_L = 0.000011 \times V + 100 \quad (2)$$

In the present disclosure, the tire cross-sectional width Wt (mm), the tire cross-sectional height Ht (mm), and the tire outer diameter Dt (mm) can be measured directly from the actual tire or from a photographed image such as CT. The Wt, Ht, and Dt are values each measured where the tire is mounted on a standardized rim and applied with an internal pressure of 250 kPa for a tire for a passenger car or 350 kPa for a tire having a maximum load capacity larger than that of the tire for a passenger car, under a no load condition with no load applied. The tire cross-sectional width Wt is a maximum width between outer surfaces of sidewalls excluding, if any, patterns or characters on the side surface of the tire in the above-described state. The above-described tire cross-sectional height Ht is a distance from the bottom

surface of a bead part to the outermost surface of a tread, which is half a difference between the outer diameter of the tire and a nominal size of a rim.

**The "standardized rim" as described above is a rim defined for** each tire in a standard system including a standard, on which the tire is based, by the standard, for example, refers to a standard rim in an applicable size described in "JATMA YEAR BOOK" in JATMA (The Japan Automobile Tyre Manufacturers Association, Inc.), "Measuring Rim" described in "STANDARDS MANUAL" in ETRTO (The European Tire and Rim Technical Organization), or "Design Rim" described in "YEAR BOOK" in TRA (The Tire and Rim Association, Inc.). In addition, in the case of tires that are not defined by the **standard, the "standardized rim" refers to a rim that can be rim-**assembled and maintain an internal pressure, that is, one that has the smallest rim diameter and secondly has the narrowest rim width, among rims that do not cause air leakage between the rim and the tire.

As a method of producing a tire having a $G/W_L$ of 0.0150 or less, various methods using common general technical knowledge can be considered. For example, examples of a method that mainly contributes to reducing the tire weight G include reducing thickness and density for a rubber of a tread part or a side part, reducing a diameter of a cord material used for the tire, reducing an arrangement density, and the like. Moreover, for example, examples of a method that mainly contributes to increasing the maximum load capacity $W_L$ include increasing the tire maximum width Wt, the tire cross-sectional height Ht, and the tire outer diameter Dt, or adjusting rigidity of each tire member to increase a volume at the time of filling with an internal pressure, or the like. By appropriately combining these methods, a tire having a $G/W_L$ of 0.0150 or less can be easily realized.

**The ratio of tan $\delta$ at 0°C of the rubber composition to the tire weight G (kg) (0°C tan $\delta$/G) is preferably more than 0.050, more preferably** more than 0.055, further preferably more than 0.060. It is considered that, as the tire weight becomes lighter, a natural frequency of the tire becomes high, and therefore, the damping property in the high frequency region correlates **well with a value of a loss tangent tan $\delta$ at a temperature lower than a normal** temperature (for example, **0°C). By setting the ratio of tan $\delta$ at 0°C of the rubber composition to the tire weight G (kg) (0°C tan $\delta$/G) within the** above-described ranges, the damping property at the tread part becomes enhanced according to the tire weight, which is considered to further improve ride comfort.

The value obtained by multiplying $G/W_L$ by $E^*_{30}$ is preferably less than 0.1000, more preferably less than 0.0950, further preferably less than 0.0900, further preferably less than 0.00880, particularly preferably less than 0.0860, from the viewpoint of suppressing vibration applied to the tire to improve ride comfort.

The rubber composition of the at least one rubber layer comprises a rubber component and a reinforcing filler and is not particularly limited as long as it is a rubber composition satisfying the above-described physical properties, but it is preferably a rubber composition in which a content of the reinforcing filler is 80 parts by mass or less based on 100 parts by mass of the rubber component comprising 30% by mass or more of an isoprene-based rubber and 20% by mass or more of a styrene-butadiene rubber. Moreover, it is more preferably a rubber composition in which a content of silica is 20 to 80 parts by mass based on 100 parts by mass of the rubber component comprising 30 to 80% by mass of an isoprene rubber and 20 to 70% by mass of a styrene-butadiene rubber and a content of silica in 100% by mass of silica and carbon black in total is 50 to 90% by mass.

In the tire according to the present disclosure, the ratio of the tire weight G (kg) to the maximum load capacity $W_L$ (kg) ($G/W_L$) is 0.0150 or less, preferably 0.0140 or less, more preferably 0.0130 or less, particularly preferably 0.0129 or less.

The maximum load capacity $W_L$ (kg) is preferably 300 or more, more preferably 400 or more, further preferably 450 or more, particularly preferably 500 or more, from the viewpoint of better exhibiting effects of the present disclosure. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present disclosure. The tire according to the present disclosure is a tire for four-wheel running and has a maximum load capacity $W_L$ (kg) of preferably 1300 or less, more preferably 1200 or less, further preferably 900 or less, particularly preferably 800 or less.

The tread of the present disclosure has at least one rubber layer. A structure of the rubber layer is, but not particularly limited to, for example, comprises a first layer and a second layer, the outer surface of the first layer constituting a tread surface, and the second layer being adjacent to inside in a radial direction of the first layer. The first layer typically corresponds to a cap tread. The second layer typically corresponds to a base tread or under tread. Besides, the rubber layer of the tread may be composed of three or more layers such as a third layer (not shown) inside in a radial direction of the second layer.

With arrangement of the rubber composition of the present disclosure as the first layer, the rubber layer (first layer) forms a land part partitioned by a tread main groove, resulting in a good followability to a road surface to improve ride comfort, and it is considered that durability can be improved by reducing heat generation due to friction with the road surface.

Moreover, the tread of the present disclosure may have one or more rubber layers inside the first layer. When the rubber composition of the present disclosure is arranged inside the first layer (for example, when the second layer

is formed of the rubber composition of the present disclosure), a soft rubber layer (second layer formed of the rubber composition of the present disclosure) is located far from the road surface, and when deformation due to shearing of the land part occurs, the deformation can be concentrated on the rubber layer and can be effectively done with a rubber layer having a low heat generation, so that it is considered that durability can be improved.

FIG. 1 is an enlarged cross-sectional view schematically showing a part of a tread of a tire. In FIG. 1, a vertical direction is a tire radial direction, a horizontal direction is a tire width direction, and a direction perpendicular to a paper surface is a tire circumferential direction.

The tread has a plurality of circumferential grooves 1 continuously extending in a tire circumferential direction. The circumferential groove 1 may extend linearly along the circumferential direction or may extend in a zigzag shape along the circumferential direction.

The tread of the present disclosure has a land part 2 partitioned by the circumferential groove 1 in a tire width direction.

A groove depth H of the circumferential groove 1 can be calculated by a distance between an extension line 4 of the land part 2 and an extension line 5 of a deepest part of a groove bottom of the circumferential groove 1. Besides, the groove depth H can be, for example, when there are a plurality of circumferential grooves 1, a distance between the extension line 4 of the land part 2 and the extension line 5 of the deepest part of the groove bottom of the circumferential groove 1 (a circumferential groove 1 on the left side in FIG. 1) having the deepest groove depth among the plurality of circumferential grooves 1. In the tire of the present disclosure, it is preferable that a rubber layer formed of the above-mentioned predetermined rubber composition is arranged on at least a part of a region of a distance H from the outermost surface (tread surface 3) of the land part 2 toward inside in the tire radial direction. Moreover, in the tire of the present disclosure, it is preferable that two or more rubber layers are present in the region of the distance H from the outermost surface of the land part toward inside in the tire radial direction, at least one of the two or more rubber layers being formed of the rubber composition. When two or more rubber layers are formed, at least one of the two or more rubber layers may be formed of the above-mentioned predetermined rubber composition.

In the present disclosure, as shown in FIG. 1, the tread comprises a first layer 6 whose outer surface constitutes the tread surface 3 and a second layer 7 adjacent to inside in the radial direction of the first layer 6. One of the circumferential grooves 1 shown on the left side of FIG. 1 is formed so that the deepest part of the groove bottom of the circumferential groove 1 is located inside in the tire radial direction with respect to the outer surface of the second layer 7. Specifically, the second layer 7 has a recessed part which is recessed inside in the tire radial direction with respect to the outer surface, and a part of the first layer 6 is formed in the recessed part of the second layer 7 with a predetermined thickness. The circumferential groove 1 is formed so as to go beyond the outer surface of the second layer 7 and enter inside of the recessed part of the second layer 7. Besides, the circumferential groove 1 may be formed at a groove depth that does not reach the outer surface of the second layer 7, such as the circumferential groove 1 shown on the right side of FIG. 1.

In FIG. 1, the double-headed arrow t1 is a thickness of the first layer 6, and the double-headed arrow t2 is a thickness of the second layer 7. In FIG. 1, a middle point in the tire width direction of the land part 2 is represented as a symbol P. A straight line represented by a symbol N is a straight line (normal line) that passes through the point P and is perpendicular to a tangent plane at this point P. In the present specification, the thicknesses t1 and t2 are measured along the normal line N drawn from the point P on the tread surface at a position where a groove does not exist, in the cross section of FIG. 1.

In the present disclosure, the maximum thickness t1 of the first layer 6 is, but not particularly limited to, preferably 1.0 mm or more, more preferably 1.5 mm or more, further preferably 2.0 mm or more. Moreover, the thickness t1 of the first layer 7 is preferably 10.0 mm or less, more preferably 9.0 mm or less, further preferably 8.0 mm or less.

In the present disclosure, the thickness t2 of the second layer 7 is, but not particularly limited to, preferably 1.0 mm or more, more preferably 1.5 mm or more, further preferably 2.0 mm or more. Moreover, the thickness t2 of the second layer 7 is preferably 10.0 mm or less, more preferably 9.0 mm or less, further preferably 8.0 mm or less.

**The rubber composition of the at least one rubber layer has a tan** $\delta$ at 30°C of 0.15 or less, preferably less than 0.15, more preferably 0.14 or less, further preferably 0.13 or less, under a condition of an initial strain of 5%, a dynamic strain of 1 %, and a frequency of 10 Hz. On the other hand, the 30°C **tan** $\delta$ **of the rubber composition of the at least one rubber layer is preferably** 0.05 or more, more preferably 0.07 or more, further preferably 0.09 or more.

The rubber composition of the at least one rubber layer has a complex elastic modulus ($E^*_{30}$) at 30°C of 8.0 MPa or less, preferably 7.8 MPa or less, more preferably 7.6 MPa or less, under a condition of an initial strain of 5%, a dynamic strain of 1%, and a frequency of 10 Hz. On the other hand, the $E^*_{30}$ of the rubber composition of the at least one rubber layer is preferably 4.0 MPa or more, more preferably 4.5 MPa or more, further preferably 5.0 MPa or more, particularly preferably 5.5 MPa or more.

**The rubber composition of the at least one rubber layer has a tan** $\delta$ at 0°C of preferably 0.35 or more, more preferably 0.36 or more, further preferably 0.37 or more, under a condition of an initial strain of 10%, a dynamic **strain of 2.5%, and a frequency of 10 Hz. When the tan** $\delta$ **at 0°C of the rubber** composition of the rubber layer

(preferably the first layer 6) is set within the above-described ranges, wet grip performance tends to be good. On the **other hand, the 0°C tan δ of the rubber composition of the at least one rubber** layer is preferably 1.20 or less, more preferably 1.00 or less, further preferably 0.80 or less, particularly preferably 0.70 or less.

The specific gravity of the rubber composition of the at least one rubber layer is preferably 1.200 or less, more preferably 1.180 or less, further preferably 1.160 or less, from the viewpoint of ride comfort.

A procedure for producing a tire comprising a tread that is one embodiment of the present disclosure will be described in detail below. However, the following descriptions are illustrative for explaining the present invention, and are not intended to limit the technical scope of the present invention to this description range only. Besides, in the present specification, a numerical range identified with "to" means to include the numerical values of both ends.

<Rubber component>

The rubber composition according to the present disclosure preferably comprises at least one selected from the group consisting of an isoprene-based rubber, a styrene-butadiene rubber (SBR), and a butadiene rubber (BR) as rubber components. The rubber component may be a rubber component comprising an isoprene-based rubber and a SBR, or may be a rubber component comprising an isoprene-based rubber, a SBR, and a BR. Moreover, the rubber component may be a rubber component consisting only of an isoprene-based rubber and a SBR, or may be a rubber component consisting only of an isoprene-based rubber, a SBR, and a BR.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. The IR is not particularly limited, and those common in the tire industry such as, for example, IR 2200 can be used. Examples of the purified NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber when compounded in 100% by mass of the rubber component is preferably 20% by mass or more, more preferably 25% by mass or more, further preferably 30% by mass or more, particularly preferably 35% by mass or more, from the viewpoints of processability and durability. On the other hand, an upper limit of the content of the isoprene-based rubber in the rubber component is, but not particularly limited to, preferably 85% by mass or less, more preferably 80% by mass or less, further preferably 75% by mass or less, particularly preferably 70% by mass or less, from the viewpoint of obtaining a good ride comfort due to the damping property at the tread part.

(SBR)

A SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, a S-SBR is preferable, and a modified S-SBR is more preferable.

Examples of the modified SBR include a modified SBR into which a functional group usually used in this field is introduced. Examples of the above-described functional group include, for example, an amino group (preferably an amino group in which a hydrogen atom of the amino group is substituted with an alkyl group having 1 to 6 carbon atoms), an amide group, a silyl group, an alkoxysilyl group (preferably an alkoxysilyl group having 1 to 6 carbon atoms), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent include, for example, functional groups such as an amino group, an amide group, an alkoxysilyl group, a carboxyl group, and a hydroxyl group. Moreover, examples of the modified SBR include hydrogenated ones, epoxidized ones, tin-modified ones, and the like.

As the SBR, an oil-extended SBR can be used, or a non-oil-extended SBR can be used. An extending oil amount of the SBR, i.e., a content of an extending oil contained in the SBR when used is preferably 10 to 50 parts by

mass based on 100 parts by mass of a rubber solid content of the SBR.

The SBRs listed above may be used alone, or two or more thereof may be used in combination. As the SBRs listed above, for example, SBRs manufactured and sold by Sumitomo Chemical Co., Ltd., JSR Corporation, Asahi Kasei Corporation, Zeon Corporation, ZS Elastomer Co., Ltd., etc. can be used.

A styrene content of the SBR is preferably 15% by mass or more, more preferably 20% by mass or more, from the viewpoints of securing damping property at the tread part and wet grip performance. Moreover, it is preferably 60% by mass or less, more preferably 50% by mass or less, from the viewpoints of temperature dependence of grip performance and abrasion resistance. Besides, in the present specification, the styrene content of the SBR is calculated by $^1$H-NMR measurement.

A vinyl bonding amount of the SBR is preferably 10 mol% or more, more preferably 13 mol% or more, further preferably 16 mol% or more, from the viewpoints of ensuring reactivity with silica, rubber strength, and abrasion resistance. Moreover, the vinyl bonding amount of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, in the present specification, the vinyl bonding amount of the SBR (1,2-bond butadiene unit amount) is measured by infrared absorption spectrometry.

A weight-average molecular weight (Mw) of the SBR is preferably 150,000 or more, more preferably 200,000 or more, further preferably 250,000 or more, from the viewpoint of abrasion resistance. Moreover, the Mw is preferably 2,500,000 or less, more preferably 2,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the SBR when compounded in 100% by mass of the rubber component is preferably 10% by mass or more, more preferably 15% by mass or more, further preferably 20% by mass or more, particularly preferably 25% by mass or more, from the viewpoints of securing damping property at the tread part and wet grip performance. Moreover, it is preferably 85% by mass or less, more preferably 80% by mass or less, further preferably 75% by mass or less, particularly preferably 70% by mass or less, from the viewpoint of improving durability by suppressing heat generation at the tread part.

(BR)

A BR is not particularly limited, and those common in the tire industry can be used such as, for example, a BR having a cis-1,4 bond content (cis content) of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Examples of the modified BR include BRs modified with similar functional groups and the like as explained in the above-described SBR.

Examples of the high cis BR include, for example, those manufactured by Zeon Corporation, those manufactured by Ube Industries, Ltd., those manufactured by JSR Corporation, and the like. When the high cis BR is compounded, low temperature characteristics and abrasion resistance can be improved. The cis content is preferably 95% or more, more preferably 96% or more, further preferably 97% or more. The cis content is also preferably 98% or more. Besides, in the present specification, the cis content is a value calculated by infrared absorption spectrometry.

As a rare-earth-based BR, those which are synthesized using a rare-earth element-based catalyst, have a vinyl bond content (1,2-bond butadiene unit amount) of preferably 1.8 mol% or less, more preferably 1.0 mol% or less, further preferably 0.8% mol or less, and a cis content (cis-1,4 bond content) of preferably 95 mol% or more, more preferably 96 mol% or more, further preferably 97 mol% or more, can be used. As the rare-earth-based BR, for example, those manufactured by LANXESS and the like can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those manufactured by Ube Industries, Ltd. and the like can be used.

As a modified BR, a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone, or two or more thereof may be used in combination.

A glass transition temperature (Tg) of the BR is preferably -14°C or lower, more preferably -17°C or lower, further preferably -20°C or lower, from the viewpoint of preventing low temperature brittleness. On the other hand, a lower limit value of the Tg is, but not particularly limited to, preferably -150°C or higher, more preferably -120°C or higher,

further preferably -110°C or higher, from the viewpoint of abrasion resistance. Besides, the glass transition temperature of the BR is a value measured by differential scanning calorimetry (DSC) under a condition of a temperature rising rate of 10°C/min according to JIS K 7121.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the BR when compounded in 100% by mass of the rubber component is preferably 1% by mass or more, more preferably 5% by mass or more, further preferably 10% by mass or more, from the viewpoint of abrasion resistance. Moreover, it is preferably 40% by mass or less, more preferably 35% by mass or less, further preferably 30% by mass or less, particularly preferably 25% by mass or less, from the viewpoint of wet grip performance.

(Other rubber components)

As the rubber components according to the present disclosure, rubber components other than the above-described isoprene-based rubbers, SBRs, and BRs may be included. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Reinforcing filler>

The rubber composition according to the present disclosure preferably comprises carbon black and silica as reinforcing fillers. Moreover, the reinforcing filler may be a reinforcing filler consisting only of carbon black and silica.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon black may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and durability. Besides, the $N_2SA$ of carbon black in the present specification is a value measured according to JIS K 6217-2: **"Carbon black for rubber industry-Fundamental characteristics-Part 2: Determination of specific surface area-Nitrogen adsorption methods-Single-point procedures" A Method.**

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, particularly preferably 18 parts by mass or less, from the viewpoint of improving durability by suppressing heat generation at the tread part.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, particularly preferably 170 $m^2/g$ or more, from the viewpoint of

securing reinforcing property and damping property at the tread part. Moreover, it is preferably 350 $m^2/g$ or less, more preferably 300 $m^2/g$ or less, further preferably 250 $m^2/g$ or less, from the viewpoints of heat generation and processability. Besides, the $N_2SA$ of silica in the present specification is a value measured by a BET method according to ASTM D3037-93.

An average primary particle size of silica is preferably 20 nm or less, more preferably 18 nm or less. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be more improved, and reinforcing property, fracture characteristics, and abrasion resistance can be further improved. Besides, the average primary particle size of silica can be calculated by observing silica with a transmission or scanning electron microscope, measuring 400 or more primary particles of silica observed in the field of view, and averaging them.

A content of silica when compounded based on 100 parts by mass of the rubber component is preferably 20 parts by mass or more, more preferably 25 parts by mass or more, further preferably 30 parts by mass or more, particularly preferably 35 parts by mass or more, from the viewpoints of securing damping property at the tread part and wet grip performance. Further, it is preferably 80 parts by mass or less, more preferably 75 parts by mass or less, further preferably 70 parts by mass or less, further preferably 65 parts by mass or less, from the viewpoints of reducing a specific gravity of a rubber to reduce the weight, improving durability by suppressing heat generation at the tread part, and securing ride comfort derived from softness of the rubber.

(Other reinforcing fillers)

As reinforcing fillers other than silica and carbon black, those commonly used in the tire industry can be compounded, such as aluminum hydroxide, calcium carbonate, alumina, clay, and talc.

A content of silica in 100% by mass of silica and carbon black in total is preferably 50% by mass or more, more preferably 60% by mass or more, further preferably 65% by mass or more, particularly preferably 70% by mass or more. Moreover, the content of silica is preferably 99% by mass or less, more preferably 97% by mass or less, further preferably 95% by mass or less, further preferably 90% by mass or less, further preferably 85% by mass or less, particularly preferably 80% by mass or less.

A total content of the reinforcing filler based on 100 parts by mass of the rubber component is preferably 80 parts by mass or less, more preferably 75 parts by mass or less, further preferably 70 parts by mass or less, **from the viewpoints of suppressing a tan $\delta$ at 30°C and a complex elastic** modulus at 30°C ($E^*_{30}$) or suppressing damage due to heat generation and obtaining a good ride comfort. Moreover, it is preferably 20 parts by mass or more, more preferably 25 parts by mass or more, further preferably 30 parts by mass or more, further preferably 35 parts by mass or more, from the viewpoints of securing reinforcing property and damping property at the tread part.

(Silane coupling agent)

Silica is preferably used in combination with a silane coupling agent. The silane coupling agent is not particularly limited, and silane coupling agents conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling **agents such as** $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. These silane coupling agents may be used alone, or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3).

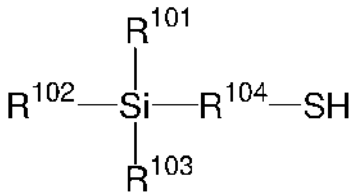

(1)

(wherein, $R^{101}$, $R^{102}$, and $R^{103}$ each independently represents a group represented by an alkyl having 1 to 12 carbon atoms, an alkoxy having 1 to 12 carbon atoms, or $-O-(R^{111}-O)_z-R^{112}$ ($R^{111}$s of z pieces each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

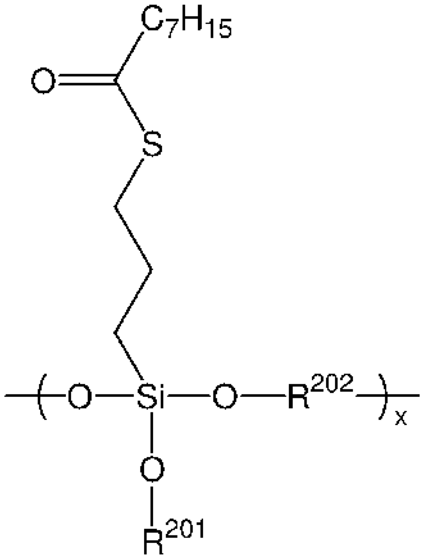

(2)

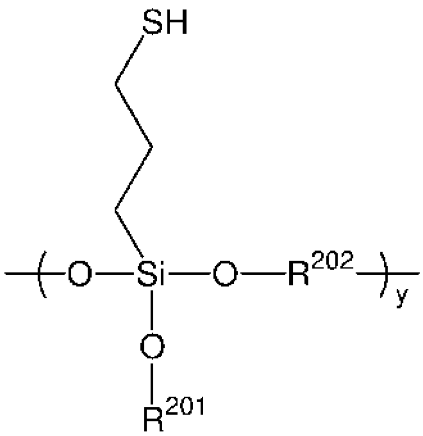

(3)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms, or an alkynyl having 2 to 30 carbon atoms, each of the alkyl, the alkenyl and the alkynyl optionally being substituted with a halogen atom, hydroxyl, or carboxyl; and $R^{202}$ represents an alkylene having 1 to 30 carbon atoms, an alkenylene having 2 to 30 carbon atoms, or an alkynylene having 2 to 30 carbon atoms; and $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone, or two or more thereof may be used in combination.

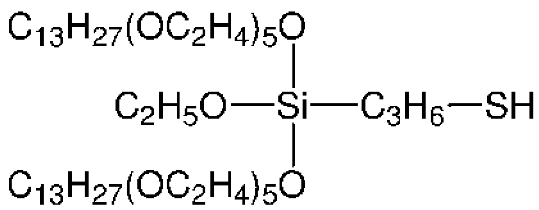

(4)

Examples of the compound comprising the bond unit A represented by the formula (2) and the bond unit B represented by the formula (3) include, for example, NXT-Z30, NXT-Z45, NXT-Z60, and NXT-Z100 manufactured by Momentive Performance Materials, and the like. They may be used alone, or two or more thereof may be used in combination.

A content of the silane coupling agent when compounded based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 30 parts by mass or less, more preferably 20 parts by mass or less, further preferably 15 parts by mass or less, from the viewpoint of preventing deterioration of abrasion resistance.

<Resin component>

The rubber composition according to the present disclosure preferably comprises a resin component. The resin component is not particularly limited, and examples of which include a petroleum resin, a terpene-based resin, a rosin-based resin, a phenol-based resin, and the like, which are commonly used in the tire industry, and these resin components may be used alone, or two or more thereof may be used in combination.

Examples of the petroleum resin include, for example, a C5-based petroleum resin, an aromatic-based petroleum resin, and a C5-C9-based petroleum resin. These petroleum resins may be used alone, or two or more thereof may be used in combination.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of **α-methylstyrene or styrene or a copolymer of** α-methylstyrene and styrene is **preferable, and a copolymer of** α-methylstyrene and styrene is more preferable, because it is economical, easy to process, and good in heat generation. As an aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As a C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin **consisting of at least one selected from terpene compounds such as** α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for **example, styrene,** α-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from

the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

As the resin component, the aromatic-based petroleum resin is preferable, and the aromatic vinyl-based resin is more preferable, from the viewpoint of obtaining ride comfort, durability and wet grip performance with a good balance.

A content of the resin component when compounded based on 100 parts by mass of the rubber component is preferably 1.0 part by mass or more, more preferably 1.5 parts by mass or more, further preferably 2.0 parts by mass or more, from the viewpoints of ride comfort and wet grip performance. Moreover, it is preferably 50 parts by mass or less, more preferably 40 parts by mass or less, further preferably 30 parts by mass or less, particularly preferably 20 parts by mass or less, from the viewpoint of durability.

(Other compounding agents)

The rubber composition according to the present disclosure can appropriately comprise compounding agents conventionally and generally used in the tire industry, for example, oil, wax, processing aid, an antioxidant, stearic acid, zinc oxide, a vulcanizing agent such as sulfur, a vulcanization accelerator, and the like, in addition to the above-described components.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, examples of the process oil include a process oil having a low content of a polycyclic aromatic (PCA) compound. Examples of the process oil having a low content of a PCA include Treated Distillate Aromatic Extract (TDAE) in which an oil aromatic process oil is re-extracted, an aroma substitute oil which is a mixture of asphalt and a naphthenic oil, mild extraction solvates (MES), a heavy naphthenic oil, and the like.

A content of oil when compounded based on 100 parts by mass of the rubber component is preferably 1 part by mass or more, more preferably 2 parts by mass or more, further preferably 3 parts by mass or more, from the viewpoint of processability. Moreover, it is preferably 80 parts by mass or less, more preferably 60 parts by mass or less, further preferably 40 parts by mass or less, further preferably 20 parts by mass or less, further preferably 15 parts by mass or less, particularly preferably 12 parts by mass or less, from the viewpoints of fuel efficiency and durability. Besides, in the present specification, the content of oil also includes an amount of oil contained in an oil-extended rubber.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

As processing aid, a fatty acid metal salt for the purpose of reducing viscosity of a rubber and securing releasability in an unvulcanized state, those widely and commercially available as a compatibilizer from the viewpoint of suppressing micro-layer separation of a rubber component, and the like can be used.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, a carbamic acid metal salt, and the like.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber

component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, but not particularly limited to, for example, sulfenamide-based, thiazole-based, thiuram-based, thiourea-based, guanidine-based, dithiocarbamate-based, aldehyde-amine-based or aldehyde-ammonia-based, imidazoline-based, and xanthate-based vulcanization accelerators. Among them, sulfenamide-based vulcanization accelerators and guanidine-based vulcanization accelerators are preferable from the viewpoint that the desired effects can be obtained more appropriately.

Examples of the sulfenamide-based vulcanization accelerator include N-cyclohexyl-2-benzothiazolyl sulfenamide (CBS), N-(tert-butyl)-2-benzothiazolyl sulfenamide (TBBS), N-oxydiethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the guanidine-based vulcanization accelerator include diphenylguanidine (DPG), diorthotrilguanidine, orthotrilbiguanidine, and the like. These vulcanization accelerators may be used alone, or two or more thereof may be used in combination.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. The kneading condition is not particularly limited. Examples of kneading include, in the base kneading step, a method of kneading at a discharge temperature at 150 to 170°C for 3 to 10 minutes, and in the final kneading step, a method of kneading at 70 to 110°C for 1 to 5 minutes.

[Tire]

The tire of the present disclosure is appropriate for a tire for a passenger car, a tire for a truck/bus, a tire for a large SUV tire, a racing tire, a tire for a motorcycle, or the like, and can be used as a summer tire, a winter tire, or a studless tire for the above-described tires. Among them, it is preferably used as a tire for a passenger car. Besides, in the present **disclosure, the term "tire for a passenger car" refers to a tire mounted on a** four-wheeled automobile and having a maximum load capacity $W_L$ of 900 kg or less.

A tire comprising a tread formed of the above-described rubber composition can be produced by a usual method. That is, the tire can be produced by extruding an unvulcanized rubber composition compounded from the rubber component and other components as necessary into a shape of at least one rubber layer of a tread, attaching it together with other tire members on a tire forming machine, and molding them by a usual method to form an unvulcanized tire, followed by heating and pressurizing this unvulcanized tire in a vulcanizing machine. The vulcanization condition is not particularly limited. Examples of vulcanization include a method of vulcanizing at 150 to 200°C for 10 to 30 minutes.

EXAMPLE

Hereinafter, the present invention will be described based on Examples, though the present invention is not limited to these Examples.

Various chemicals used in Examples and Comparative examples are collectively shown below.

NR: TSR20

SBR: Modified solution-polymerized SBR produced in Production example 1 which will be described later (styrene content: 30% by mass, vinyl bond amount: 52 mol%, Mw: 250,000, a non-oil-extended product)

BR: UBEPOL BR (Registered Trademark) 150B manufactured by Ube Industries, Ltd. (cis content: 97%, Tg: -108°C, Mw: 440,000)

Carbon Black: DIABLACK N220 manufactured by Mitsubishi Chemical Corporation ($N_2SA$: 115 $m^2/g$)

Silica: Ultrasil (Registered Trademark) VN3 manufactured by Evonik Degussa GmbH ($N_2SA$: 175 $m^2/g$, average primary particle size: 17 nm)

Silane coupling agent: Si266 manufactured by Evonik Degussa GmbH (bis(3-triethoxysilylpropyl)disulfide)

Oil: VivaTec 400 manufactured by H&R Group (TDAE oil)

Resin component: Sylvares SA85 manufactured by Kraton **Corporation (copolymer of** α-methylstyrene and styrene, softening point: 85°C)

Zinc oxide: Zinc oxide No. 1 manufactured by Mitsui Mining & Smelting Co., Ltd.

**Stearic acid: Bead stearic acid "CAMELLIA" manufactured by NOF** CORPORATION

Sulfur: HK-200-5 manufactured by Hosoi Chemical Industry Co., Ltd. (5% oil-containing powdered sulfur)

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

Production example 1: Synthesis of SBR

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a denaturant to perform reaction. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a SBR.

(Examples and Comparative examples)

According to the compounding formulations shown in Tables 1 to 4, using a 1.7 L closed Banbury mixer, all chemicals other than sulfur and vulcanization accelerators were kneaded until a discharge temperature from 150°C to 160°C for a period of 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test rubber composition.

The unvulcanized rubber composition with formulation shown in Tables 1 to 3 was used as a first layer of a tread, extruded so as to have a 7.0 mm thickness of the first layer and a 3.0 mm thickness of a second layer with an extruder equipped with a mouthpiece having a predetermined shape, and attached together with tire members other than the tread to form an unvulcanized tire, and the unvulcanized tire was press-vulcanized for 12 minutes under a condition at 170°C to produce and prepare a test tire 1 (size: 195/65R15 91V, rim: 15 × 6.0J), a test tire 2 (size: 225/55R17 97V, rim: 17 × 7.0J), and a test tire 3 (size: 185/55R16 83V, rim: 15 × 6.0J), respectively.

Moreover, the unvulcanized rubber composition with formulation shown in Table 4 was used as a second layer of the tread, extruded so as to have a 2.5 mm thickness of the first layer and a 6.0 mm thickness of the second layer with the extruder equipped with a mouthpiece having a predetermined shape, attaching a third layer of the tread to the inside in a radial direction of the second layer of the extruded tread part, and attached together with tire members other than the tread to form an unvulcanized tire, and the unvulcanized tire was press-vulcanized for 12 minutes under a condition at 170°C to produce and prepare a test tire 4 (size: 195/65R15 91V, rim: 15 × 6.0J), respectively.

Besides, the "groove depth H (mm)" in Tables 1 to 4 represents a distance between a land part and an extension line of a deepest part of a groove bottom of a circumferential groove. Moreover, a "position from a tread surface (mm)" is described as "0" when a rubber layer is a first layer having a tread surface, or it represents a shortest distance from the tread surface to the rubber layer when the rubber layer is a layer other than the first layer.

The obtained test rubber composition and test tires were evaluated as follows. The evaluation results are shown in Tables 1 to 4. Besides, each maximum load capacity $W_L$ (kg) is a value calculated by the above-described equations (1) and (2) where the tire cross-sectional width is defined as Wt (mm), the tire cross-sectional height is defined as Ht

(mm), and the tire outer diameter is defined as Dt (mm) when each tire is filled with 250 kPa of air.

**<Measurement of tan δ and complex elastic modulus E*>**

Each rubber test piece after vulcanization was cut out with length 20 mm × width 4 mm × thickness 2 mm from each rubber layer of a tread part of each test tire so that a tire circumferential direction is on a long side. For each rubber test piece, using EPLEXOR series manufactured by gabo **Systemtechnik GmbH, a tan δ was measured under a condition of a** temperature at 0°C, an initial strain of 10%, a dynamic strain of 2.5%, and a frequency of 10 Hz, and under a condition of 30°C, an initial strain of 5%, a dynamic strain of 1%, and a frequency of 10 Hz. Moreover, for each rubber test piece, a complex elastic modulus (E*) was measured under a condition of a temperature at 30°C, an initial strain of 5%, a dynamic strain of 1%, and a frequency of 10 Hz. Besides, a thickness direction of a sample was defined as a tire radial direction.

<Evaluation on durability>

Each test tire was filled with 250 kPa of air. This tire was mounted on a drum type running tester, applied with a vertical load of 18.75 kN, and run on a drum having a radius of 1.7 m at a speed of 80 km/h to measure a running distance until the tire was broken. The measurement was indicated as an index with the reference Comparative example (Comparative example 3 in Table 1, Comparative example 6 in Table 2, Comparative example 9 in Table 3, and Comparative example 12 in Table 4) being as 100. The results show that the larger the index is, the better the durability is.

<Evaluation on ride comfort>

Each test tire was filled with 250 kPa of air and mounted on an automobile having a displacement of 2000 cc. This automobile was run on a test course whose road surface was asphalt, and the ride comfort was sensory evaluated by a test driver. The evaluations were performed using an integer value of 1 to 10 points, and based on evaluation criteria that the higher the score is, the better the ride comfort is, a total score by 10 test drivers was calculated. A total score of the reference Comparative examples (Comparative example 3 in Table 1, Comparative example 6 in Table 2, Comparative example 9 in Table 3, and Comparative example 12 in Table 4) was converted into a reference value (100), and the evaluation result for each test tire was indicated as an index in proportion to the total score.

Table 1

Test tire 1 (size: 195/65R15 91V, rim: 15 × 6.0J)

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| NR | 40 | 40 | 40 | 40 | 40 | 55 | 70 | 30 | 70 | 30 |
| SBR | 50 | 50 | 50 | 50 | 50 | 30 | 30 | 60 | 20 | 70 |
| BR | 10 | 10 | 10 | 10 | 10 | 15 | - | 10 | 10 | - |
| Carbon black | 15 | 15 | 15 | 15 | 5.0 | 15 | 15 | 15 | 15 | 15 |
| Silica | 45 | 51 | 38 | 45 | 65 | 45 | 45 | 45 | 45 | 45 |
| Silane coupling agent | 4.5 | 5.1 | 3.8 | 4.5 | 6.5 | 4.5 | 4.5 | 4.5 | 4.5 | 4.5 |
| Oil | 10 | 12 | 7.0 | 10 | 2.0 | 10 | 10 | 10 | 10 | 10 |
| Resin component | 3.0 | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 | 1.0 |

- continued -

- continued -

| | Example | | | | | | | | | |
|---|---|---|---|---|---|---|---|---|---|---|
| | 1 | 2 | 3 | 4 | 5 | 6 | 7 | 8 | 9 | 10 |
| Rubber layer | | | | | | | | | | |
| Position from tread surface (mm) | 0 | 0 | 0 | 0 | 0 | 0 | 0 | 0 | 0 | 0 |
| $E^*_{30}$ (MPa) | 6.0 | 6.8 | 5.3 | 6.0 | 7.6 | 6.1 | 6.3 | 5.8 | 6.5 | 5.6 |
| **30°C tan δ** | 0.13 | 0.15 | 0.11 | 0.13 | 0.14 | 0.12 | 0.11 | 0.13 | 0.10 | 0.12 |
| **0°C tan δ** | 0.52 | 0.54 | 0.49 | 0.52 | 0.56 | 0.45 | 0.39 | 0.54 | 0.37 | 0.57 |
| Specific gravity | 1.140 | 1.150 | 1.132 | 1.140 | 1.180 | 1.136 | 1.132 | 1.141 | 1.130 | 1.142 |
| Tire | | | | | | | | | | |
| Groove depth H (mm) | 6.0 | 6.0 | 6.0 | 8.5 | 6.0 | 6.0 | 6.0 | 6.0 | 6.0 | 6.0 |
| G (kg) | 6.90 | 6.92 | 6.89 | 7.70 | 6.97 | 6.89 | 6.89 | 6.90 | 6.88 | 6.90 |
| $W_L$ (kg) | 534 | 538 | 536 | 531 | 534 | 539 | 535 | 537 | 532 | 538 |
| $G/W_L$ | 0.0129 | 0.0129 | 0.0129 | 0.0145 | 0.0130 | 0.0128 | 0.0129 | 0.0129 | 0.0129 | 0.0128 |
| $G/W_L \times E^*_{30}$ | 0.0774 | 0.0877 | 0.0684 | 0.0870 | 0.0988 | 0.0781 | 0.0813 | 0.0748 | 0.0839 | 0.0717 |
| **0°C tan δ/G** | 0.075 | 0.078 | 0.071 | 0.068 | 0.080 | 0.065 | 0.057 | 0.078 | 0.054 | 0.083 |
| Index | | | | | | | | | | |
| Durability | 104 | 103 | 109 | 110 | 103 | 108 | 112 | 101 | 113 | 110 |
| Ride comfort | 120 | 124 | 110 | 114 | 122 | 124 | 106 | 126 | 122 | 124 |

- continued -

- continued -

| | Comparative example | | |
|---|---|---|---|
| | 1 | 2 | 3 |
| Compounding amount (part by mass) | | | |
| NR | 40 | 40 | 40 |
| SBR | 50 | 50 | 50 |
| BR | 10 | 10 | 10 |
| Carbon black | 15 | 20 | 15 |
| Silica | 56 | 48 | 45 |
| Silane coupling agent | 5.6 | 4.8 | 4.5 |
| Oil | 15 | 11 | 10 |
| Resin component | 3.0 | 3.0 | 3.0 |
| Zinc oxide | 3.0 | 3.0 | 3.0 |
| Stearic acid | 3.0 | 3.0 | 3.0 |
| Sulfur | 1.5 | 1.5 | 1.5 |
| Vulcanization accelerator 1 | 2.0 | 2.0 | 2.0 |
| Vulcanization accelerator 2 | 1.0 | 1.0 | 1.0 |
| Rubber layer | | | |
| Position from tread surface (mm) | 0 | 0 | 0 |
| $E^*_{30}$ (MPa) | 7.6 | 8.3 | 6.0 |
| **30°C tan δ** | 0.17 | 0.15 | 0.13 |
| **0°C tan δ** | 0.56 | 0.51 | 0.52 |
| Specific gravity | 1.163 | 1.160 | 1.140 |
| Tire | | | |
| Groove depth H (mm) | 6.0 | 6.0 | 9.5 |
| G (kg) | 6.95 | 6.94 | 8.10 |
| $W_L$ (kg) | 531 | 530 | 531 |
| $G/W_L$ | 0.0131 | 0.0131 | 0.0153 |
| $G/W_L \times E^*_{30}$ | 0.0996 | 0.1087 | 0.0918 |
| **0°C tan δ/G** | 0.081 | 0.073 | 0.064 |
| Index | | | |
| Durability | 87 | 93 | 100 |
| Ride comfort | 102 | 98 | 100 |

Table 2

| Test tire 2 (size: 225/55R17 97V, rim: 17 × 7.0J) | | | | | | | | | |
|---|---|---|---|---|---|---|---|---|---|
| | Example | | | | | | Comparative example | | |
| | 11 | 12 | 13 | 14 | 15 | 16 | 4 | 5 | 6 |
| Compounding amount (part by mass) | | | | | | | | | |
| NR | 40 | 40 | 40 | 40 | 70 | 30 | 40 | 40 | 40 |
| SBR | 50 | 50 | 50 | 50 | 20 | 70 | 50 | 50 | 50 |
| BR | 10 | 10 | 10 | 10 | 10 | - | 10 | 10 | 10 |
| Carbon black | 15 | 15 | 15 | 5.0 | 15 | 15 | 15 | 20 | 15 |
| Silica | 45 | 38 | 45 | 65 | 45 | 45 | 56 | 48 | 45 |
| Silane coupling agent | 4.5 | 3.8 | 4.5 | 6.5 | 4.5 | 4.5 | 5.6 | 4.8 | 4.5 |

(continued)

| Test tire 2 (size: 225/55R17 97V, rim: 17 × 7.0J) | | | | | | | | | |
|---|---|---|---|---|---|---|---|---|---|
| | Example | | | | | | Comparative example | | |
| | 11 | 12 | 13 | 14 | 15 | 16 | 4 | 5 | 6 |
| Compounding amount (part by mass) | | | | | | | | | |
| Oil | 10 | 7.0 | 10 | 2.0 | 10 | 10 | 15 | 11 | 10 |
| Resin component | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 |
| Rubber layer | | | | | | | | | |
| Position from tread surface (mm) | 0 | 0 | 0 | 0 | 0 | 0 | 0 | 0 | 0 |
| $E^*_{30}$ (MPa) | 6.0 | 5.3 | 6.0 | 7.6 | 6.5 | 5.6 | 7.6 | 8.3 | 6.0 |
| **30°C tan δ** | 0.13 | 0.11 | 0.13 | 0.14 | 0.10 | 0.12 | 0.17 | 0.15 | 0.13 |
| **0°C tan δ** | 0.52 | 0.49 | 0.52 | 0.56 | 0.37 | 0.57 | 0.56 | 0.51 | 0.52 |
| Specific gravity | 1.140 | 1.132 | 1.140 | 1.180 | 1.130 | 1.142 | 1.163 | 1.160 | 1.140 |
| Tire | | | | | | | | | |
| Groove depth H (mm) | 6.5 | 6.5 | 8.0 | 6.5 | 6.5 | 6.5 | 6.5 | 6.5 | 9.5 |
| G (kg) | 8.70 | 8.64 | 9.10 | 8.83 | 8.63 | 8.71 | 8.76 | 8.75 | 9.75 |
| $W_L$ (kg) | 635 | 638 | 633 | 638 | 639 | 639 | 633 | 634 | 637 |
| $G/W_L$ | 0.0137 | 0.0135 | 0.0144 | 0.0138 | 0.0135 | 0.0136 | 0.0138 | 0.0138 | 0.0153 |
| $G/W_L \times E^*_{30}$ | 0.0822 | 0.0716 | 0.0864 | 0.1049 | 0.0878 | 0.0762 | 0.1049 | 0.1145 | 0.0918 |
| **0°C tan δ/G** | 0.060 | 0.057 | 0.057 | 0.063 | 0.043 | 0.065 | 0.064 | 0.058 | 0.053 |
| Index | | | | | | | | | |
| Durability | 105 | 109 | 110 | 103 | 113 | 111 | 88 | 93 | 100 |
| Ride comfort | 124 | 114 | 110 | 124 | 126 | 128 | 104 | 102 | 100 |

Table 3

| Test tire 3 (size: 185/55R16 83V, rim: 15 × 6.0J) | | | | | | | | | |
|---|---|---|---|---|---|---|---|---|---|
| | Example | | | | | | Comparative example | | |
| | 17 | 18 | 19 | 20 | 21 | 22 | 7 | 8 | 9 |
| Compounding amount (part by mass) | | | | | | | | | |
| NR | 40 | 40 | 40 | 40 | 70 | 30 | 40 | 40 | 40 |
| SBR | 50 | 50 | 50 | 50 | 20 | 70 | 50 | 50 | 50 |
| BR | 10 | 10 | 10 | 10 | 10 | - | 10 | 10 | 10 |

(continued)

| Test tire 3 (size: 185/55R16 83V, rim: 15 × 6.0J) | | | | | | | | | |
|---|---|---|---|---|---|---|---|---|---|
| | Example | | | | | | Comparative example | | |
| | 17 | 18 | 19 | 20 | 21 | 22 | 7 | 8 | 9 |
| Compounding amount (part by mass) | | | | | | | | | |
| Carbon black | 15 | 15 | 15 | 5.0 | 15 | 15 | 15 | 20 | 15 |
| Silica | 45 | 38 | 45 | 65 | 45 | 45 | 56 | 48 | 45 |
| Silane coupling agent | 4.5 | 3.8 | 4.5 | 6.5 | 4.5 | 4.5 | 5.6 | 4.8 | 4.5 |
| Oil | 10 | 7.0 | 10 | 2.0 | 10 | 10 | 15 | 11 | 10 |
| Resin component | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 |
| Rubber layer | | | | | | | | | |
| Position from tread surface (mm) | 0 | 0 | 0 | 0 | 0 | 0 | 0 | 0 | 0 |
| $E^*_{30}$ (MPa) | 6.0 | 5.3 | 6.0 | 7.6 | 6.5 | 5.6 | 7.6 | 8.3 | 6.0 |
| **30°C tan $\delta$** | 0.13 | 0.11 | 0.13 | 0.14 | 0.10 | 0.12 | 0.17 | 0.15 | 0.13 |
| **0°C tan $\delta$** | 0.52 | 0.49 | 0.52 | 0.56 | 0.37 | 0.57 | 0.56 | 0.51 | 0.52 |
| Specific gravity | 1.140 | 1.132 | 1.140 | 1.180 | 1.130 | 1.142 | 1.163 | 1.160 | 1.140 |
| Tire | | | | | | | | | |
| Groove depth H (mm) | 6.2 | 6.2 | 7.5 | 6.2 | 6.2 | 6.2 | 6.2 | 6.2 | 9.0 |
| G (kg) | 5.70 | 5.66 | 6.10 | 5.85 | 5.65 | 5.71 | 5.79 | 5.77 | 6.50 |
| $W_L$ (kg) | 433 | 431 | 430 | 434 | 437 | 431 | 432 | 433 | 427 |
| $G/W_L$ | 0.0132 | 0.0131 | 0.0142 | 0.0135 | 0.0129 | 0.0132 | 0.0134 | 0.0133 | 0.0152 |
| $G/W_L \times E^*_{30}$ | 0.0792 | 0.0694 | 0.0852 | 0.1029 | 0.0839 | 0.0739 | 0.1018 | 0.1104 | 0.0912 |
| **0°C tan $\delta$/G** | 0.091 | 0.087 | 0.085 | 0.096 | 0.065 | 0.100 | 0.097 | 0.088 | 0.080 |
| Index | | | | | | | | | |
| Durability | 106 | 109 | 111 | 103 | 115 | 112 | 88 | 95 | 100 |
| Ride comfort | 124 | 112 | 116 | 126 | 126 | 128 | 104 | 102 | 100 |

Table 4

| Test tire 4 (size: 195/65R15 91V, rim: 15 × 6.0J) | | | | | | | | | |
|---|---|---|---|---|---|---|---|---|---|
| | Example | | | | | | Comparative example | | |
| | 23 | 24 | 25 | 26 | 27 | 28 | 10 | 11 | 12 |
| Compounding amount (part by mass) | | | | | | | | | |
| NR | 40 | 40 | 40 | 40 | 70 | 30 | 40 | 40 | 40 |
| SBR | 50 | 50 | 50 | 50 | 20 | 70 | 50 | 50 | 50 |
| BR | 10 | 10 | 10 | 10 | 10 | - | 10 | 10 | 10 |
| Carbon black | 15 | 15 | 15 | 5.0 | 15 | 15 | 15 | 20 | 15 |
| Silica | 45 | 38 | 45 | 65 | 45 | 45 | 56 | 48 | 45 |
| Silane coupling agent | 4.5 | 3.8 | 4.5 | 6.5 | 4.5 | 4.5 | 5.6 | 4.8 | 4.5 |
| Oil | 10 | 7.0 | 10 | 2.0 | 10 | 10 | 15 | 11 | 10 |
| Resin component | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 |
| Rubber layer | | | | | | | | | |
| Position from tread surface (mm) | 2.5 | 2.5 | 2.5 | 2.5 | 2.5 | 2.5 | 2.5 | 2.5 | 2.5 |
| $E^*_{30}$ (MPa) | 6.0 | 5.3 | 6.0 | 7.6 | 6.5 | 5.6 | 7.6 | 8.3 | 6.0 |
| **30°C tan $\delta$** | 0.13 | 0.11 | 0.13 | 0.14 | 0.10 | 0.12 | 0.17 | 0.15 | 0.13 |
| **0°C tan $\delta$** | 0.52 | 0.49 | 0.52 | 0.56 | 0.37 | 0.57 | 0.56 | 0.51 | 0.52 |
| Specific gravity | 1.140 | 1.132 | 1.140 | 1.180 | 1.130 | 1.142 | 1.163 | 1.160 | 1.140 |
| Tire | | | | | | | | | |
| Groove depth H (mm) | 6.1 | 6.1 | 8.5 | 6.1 | 6.1 | 6.1 | 6.1 | 6.1 | 9.5 |
| G (kg) | 6.88 | 6.90 | 7.68 | 6.95 | 6.89 | 6.88 | 6.92 | 6.92 | 8.30 |
| $W_L$ (kg) | 536 | 537 | 534 | 536 | 533 | 537 | 534 | 534 | 535 |
| $G/W_L$ | 0.0128 | 0.0128 | 0.0144 | 0.0130 | 0.0129 | 0.0128 | 0.0130 | 0.0130 | 0.0155 |
| $G/W_L \times E^*_{30}$ | 0.0768 | 0.0678 | 0.0864 | 0.0988 | 0.0839 | 0.0717 | 0.0988 | 0.1079 | 0.0930 |
| **0°C tan $\delta$/G** | 0.076 | 0.071 | 0.068 | 0.081 | 0.054 | 0.083 | 0.081 | 0.074 | 0.063 |
| Index | | | | | | | | | |
| Durability | 110 | 112 | 114 | 108 | 117 | 114 | 91 | 97 | 100 |
| Ride comfort | 124 | 108 | 116 | 124 | 126 | 126 | 104 | 100 | 100 |

From the results in Tables 1 to 4, it can be found that the tire of the present disclosure, obtained by setting the tire weight with respect to the maximum load **capacity of the tire, the tan $\delta$ and the complex elastic modulu**s of the rubber composition of the tread within the predetermined ranges, has improved durability and ride comfort with a good balance. Moreover, it can be f**ound that the tan $\delta$ at 0°C is 0.35** or more and that the tire also has a good wet grip performance.

EXPLANATION OF NUMERALS

1. Circumferential groove
2. Land part
3. Tread surface
4. Extension line of land part
5. Extension line of deepest part of groove bottom of circumferential groove
6. First layer
7. Second layer
8. Extension line of outer surface of second layer

Wt. Tire cross-sectional width
Ht. Tire cross-sectional height
Dt. Tire outer diameter

## Claims

1. A tire comprising a tread,

   wherein a ratio of a tire weight G (kg) to a maximum load capacity $W_L$ (kg) of the tire ($G/W_L$) is 0.0150 or less,
   wherein the tread has at least one rubber layer formed of a rubber composition comprising a rubber component and a reinforcing filler, and
   **wherein a tan δ at 30°C of the rubber composition is 0.15 or less,** and a complex elastic modulus at 30°C ($E^*_{30}$) of the rubber composition is 8.0 MPa or less.

2. **The tire of claim 1, wherein a tan δ at 0°C of the rubber** composition is 0.35 or more.

3. **The tire of claim 1 or 2, wherein a ratio of the tan δ at 0°C of the rubber composition to the tire weight G (kg) (0°C tan δ/G) is more than 0.050.**

4. The tire of any one of claims 1 to 3, wherein the rubber composition has a specific gravity of 1.200 or less.

5. The tire of any one of claims 1 to 4, wherein a content of the reinforcing filler based on 100 parts by mass of the rubber component is 80 parts by mass or less.

6. The tire of any one of claims 1 to 5, wherein the rubber component comprises 30% by mass or more of an isoprene-based rubber and 20% by mass or more of a styrene-butadiene rubber.

7. The tire of any one of claims 1 to 6, wherein a value obtained by multiplying $G/W_L$ by $E^*_{30}$ is less than 0.1000.

8. The tire of any one of claims 1 to 7, wherein a content of silica based on 100 parts by mass of the rubber component is 20 to 80 parts by mass, and a content of silica in 100% by mass of silica and carbon black in total is 50 to 90% by mass.

9. The tire of any one of claims 1 to 8, wherein the rubber component comprises 30 to 80% by mass of an isoprene-based rubber and 20 to 70% by mass of a styrene-butadiene rubber.

10. The tire of any one of claims 1 to 9, wherein the rubber component further comprises a butadiene rubber.

11. **The tire of any one of claims 1 to 10, wherein the tan δ at 0°C of the rubber composition is 0.35 to 0.80, and 0°C tan δ/G is more than 0.055.**

12. The tire of any one of claims 1 to 11, wherein the tread has a land part partitioned by a plurality of circumferential grooves, and
    wherein, when a distance between an extension line of the land part and an extension line of a deepest part of a groove bottom of the circumferential groove is defined as H, a rubber layer formed of the rubber composition is arranged on at least a part of a region of the distance H from the outermost surface of the land part toward inside

in a radial direction.

13. The tire of claim 12, wherein two or more rubber layers are present in the region of the distance H from the outermost surface of the land part toward inside in the radial direction, at least one of the two or more rubber layers being formed of the rubber composition.

FIG. 1

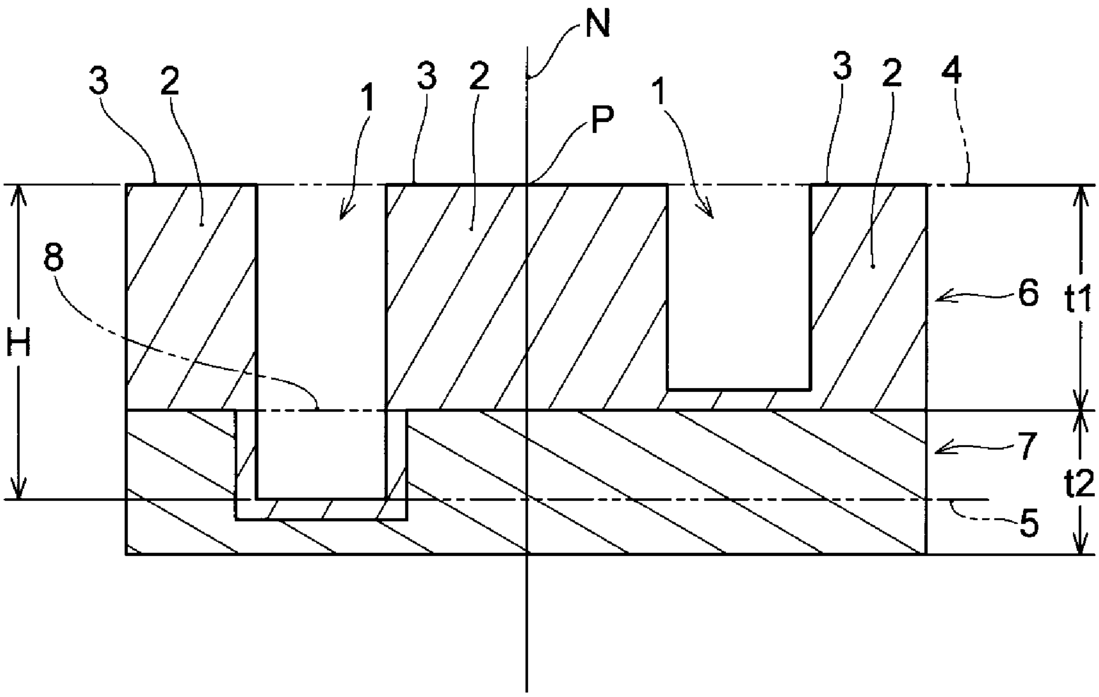

FIG. 2

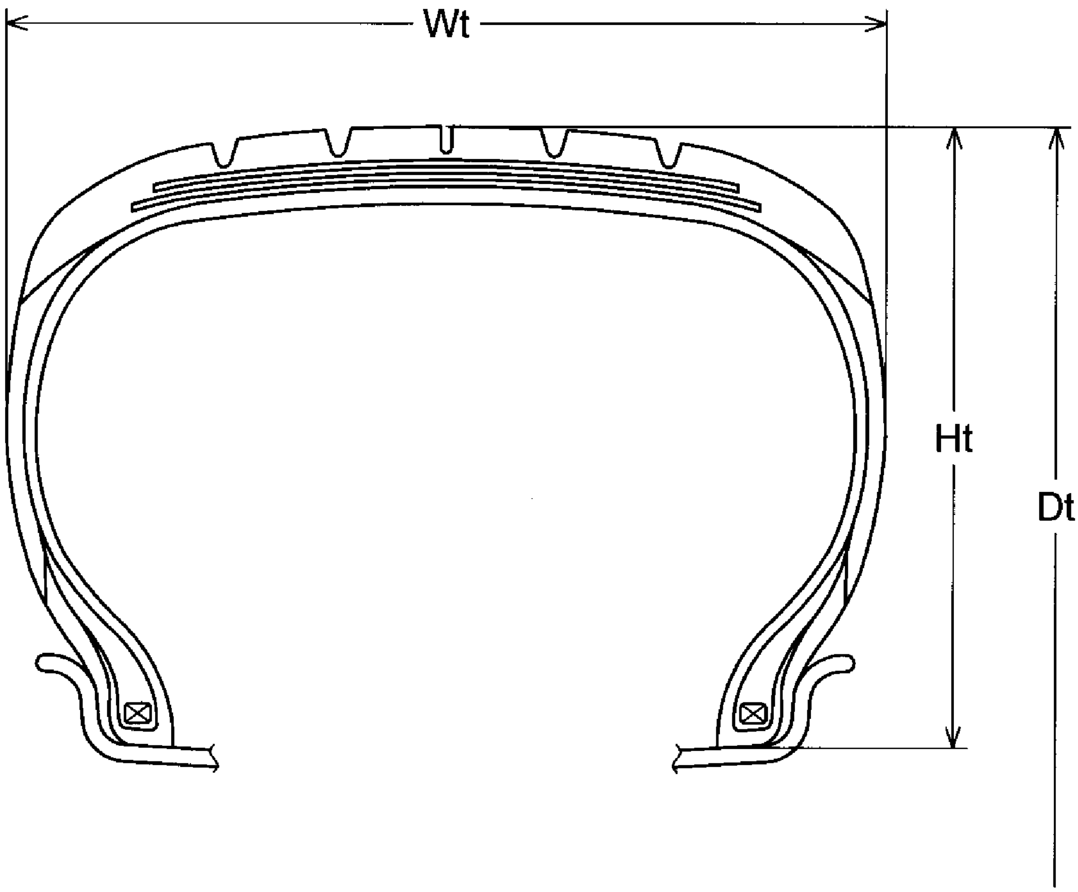

## INTERNATIONAL SEARCH REPORT

International application No. PCT/JP2021/015077

**A. CLASSIFICATION OF SUBJECT MATTER**

B60C 1/00(2006.01)i; C08L 7/00(2006.01)i; C08K 3/013(2018.01)i; B60C 11/00(2006.01)i
FI: B60C11/00 B; B60C11/00 D; B60C1/00 A; C08K3/013; C08L7/00

According to International Patent Classification (IPC) or to both national classification and IPC

**B. FIELDS SEARCHED**

Minimum documentation searched (classification system followed by classification symbols)
B60C1/00; C08L7/00; C08K3/013; B60C11/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-049409 A (THE GOODYEAR TIRE & RUBBER COMPANY) 14 March 2013 (2013-03-14) entire text | 1-13 |
| A | WO 2015/170615 A1 (BRIDGESTONE CORPORATION) 12 November 2015 (2015-11-12) entire text | 1-13 |
| A | JP 2003-291610 A (SUMITOMO RUBBER INDUSTRIES, LTD.) 15 October 2003 (2003-10-15) entire text | 1-13 |
| A | JP 2015-209164 A (SUMITOMO RUBBER INDUSTRIES, LTD.) 24 November 2015 (2015-11-24) entire text | 1-13 |
| A | JP 2010-174232 A (THE YOKOHAMA RUBBER CO., LTD.) 12 August 2010 (2010-08-12) entire text | 1-13 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 June 2021 (18.06.2021) | 29 June 2021 (29.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/015077

| Patent Documents referred in the Report | Publication Date | Patent Family | Publication Date |
|---|---|---|---|
| JP 2013-049409 A | 14 Mar. 2013 | US 2013/0048169 A1<br>claims, examples<br>EP 2565056 A1<br>CN 102963216 A<br>KR 10-2013-0024794 A | |
| WO 2015/170615 A1 | 12 Nov. 2015 | US 2017/0050469 A1<br>claims, examples<br>EP 3141402 A1<br>CN 106232389 A | |
| JP 2003-291610 A | 15 Oct. 2003 | (Family: none) | |
| JP 2015-209164 A | 24 Nov. 2015 | (Family: none) | |
| JP 2010-174232 A | 12 Aug. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005212742 A